# EUROPEAN PATENT APPLICATION

(11) **EP 4 319 457 A1**
(43) Date of publication of application: **07.02.2024**
(21) Application number: 22780322.8
(22) Date of filing: 22.03.2022
(51) Int. Cl.: H04W 76/15, H04W 76/18, H04W 74/08

(54) **TERMINAL, BASE STATION, AND WIRELESS COMMUNICATION METHOD**

(30) Priority: 29.03.2021 JP 2021055163
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: MAEMOTO, Daiki, Kariya-city, Aichi 448-8661 (JP); TAKAHASHI, Hideaki, Kariya-city, Aichi 448-8661 (JP)
(74) Representative: TBK
(86) International application number: PCT/JP2022/013201
(87) International publication number: WO 2022/210107

(57) **Abstract**

The purpose of this disclosure is to provide a terminal including: a receiving unit which receives an RRC reconfiguration message including information about the configuration of one or more candidate cells and information about an execution condition of a specific procedure for the candidate cells; a control unit which controls the execution of the specific procedure based on the information about the configuration and the information about the execution condition; and a transmitting unit which transmits a message including information about a reason for a failure when the execution of the specific procedure fails.

## Description

### Cross-Reference to Related Application

This application is based on and claims priority to Japanese Patent Application No. 2021-055163, filed on March 29, 2021, the entire contents of which are incorporated herein by reference.

### Technical Field

This disclosure relates to a terminal, a base station, and a wireless communication method.

### Background Art

In the 3rd Generation Partnership Project (3GPP) as an international standards organization, New Radio (NR) Release 15 as the 5th generation (5G) RAT (Radio Access Technology) is specified as a successor to Long Term Evolution (LTE) as the 3.9th generation RAT and LTE-Advanced as the 4th generation RAT (for example, Non-Patent Document 1). LTE and/or LTE-Advanced is also called Evolved Universal Terrestrial Radio Access (E-UTRA).

In E-UTRA and NR, dual connectivity (DC) in which a terminal performs communication using plural cell groups (CGs) respectively including one or more cells is supported. In the DC, the terminal is connected to a Master Node (MN) associated with a Master Cell Group (MCG), and a Secondary Node (SN) associated with a Secondary Cell Group (SCG). The MCG may include one Primary Cell (PCell), and one or more Secondary Cells (SCells). The SCG may include one Primary SCG Cell (PSCell) and one or more SCells.

### Citation List

### Non-Patent Document

Non-Patent Document 1: 3GPP TS 38.300 V15.2.0 (2018-06)

### Summary of Invention

In the 3GPP, it is currently considered that the terminal determines whether or not an execution condition for candidates of a cell to be subjected to a specific procedure (hereinafter called a "candidate cell") is fulfilled to execute the specific procedure on the candidate cell for which the execution condition is fulfilled (hereinafter called "conditional procedure") for the purpose of improving mobility performance (for example, suppression of processing delay and/or communication interruption time). For example, in the DC, Conditional PSCell Addition and/or Change (CPAC) is so considered that the terminal determines whether or not the execution condition for the candidate cell of the above PSCell is fulfilled to execute the addition and/or change of the above PSCell based on the determination result.

However, even when the conditional procedure described above fails, a network cannot know a failure reason of the conditional procedure in the terminal. Therefore, the network cannot take measures to prevent the failure (for example, coordination of information about the configuration of one or more candidate cells of the conditional procedure and/or information about the execution condition) properly. As a result, there is a risk that the resource utilization efficiency of the entire system decreases.

An object of this disclosure is to provide a terminal, a base station, and a wireless communication method capable of improving the resource utilization efficiency of the entire system.

A terminal according to one aspect of this disclosure includes: a receiving unit which receives an RRC reconfiguration message including information about the configuration of one or more candidate cells and information about an execution condition of a specific procedure for the candidate cells; a control unit which controls the execution of the specific procedure based on the information about the configuration and the information about the execution condition; and a transmitting unit which transmits a message including information about a reason for a failure when the execution of the specific procedure fails.

According to one aspect of this disclosure, the resource utilization efficiency of the entire system can be improved.

### Brief Description of Drawings

Fig. 1 is a diagram illustrating an example of the overview of a wireless communication system according to the present embodiment.
Fig. 2 is a chart illustrating an example of PSCell Addition (CPA).
Fig. 3 is a diagram illustrating an example of UE variables.
Fig. 4 is a chart illustrating an example of PSCell Change (CPC).
Fig. 5 is a chart illustrating an example of CPA using a timer according to the present embodiment.
Fig. 6 is a chart illustrating an example of CPC using the timer according to the present embodiment.
Fig. 7 is a chart illustrating an example of notification of CPA failure reason information according to the present embodiment.
Fig. 8 is a diagram illustrating an example of SCG Failure Information in the case of EN-DC (or NGEN-DC) according to the present embodiment.
Fig. 9 is a diagram illustrating an example of SCG Failure Information in the case of NR-DC according to the present embodiment.
Fig. 10 is a diagram illustrating an example of SCG Failure Information in the case of NE-DC according to the present embodiment.
Fig. 11 is a chart illustrating an example of notification of CPC failure reason information according to the present embodiment.
Fig. 12 is a diagram illustrating an example of the hardware configuration of each equipment in the wireless communication system according to the present embodiment.
Fig. 13 is a diagram illustrating an example of the functional block configuration of a terminal according to the present embodiment.
Fig. 14 is a diagram illustrating an example of the functional block configuration of a base station according to the present embodiment.

### Description of Embodiment

An embodiment of this disclosure will be described with reference to the accompanying drawings. Note that components to which the same reference numerals are given in respective drawings may have the same or similar configurations.

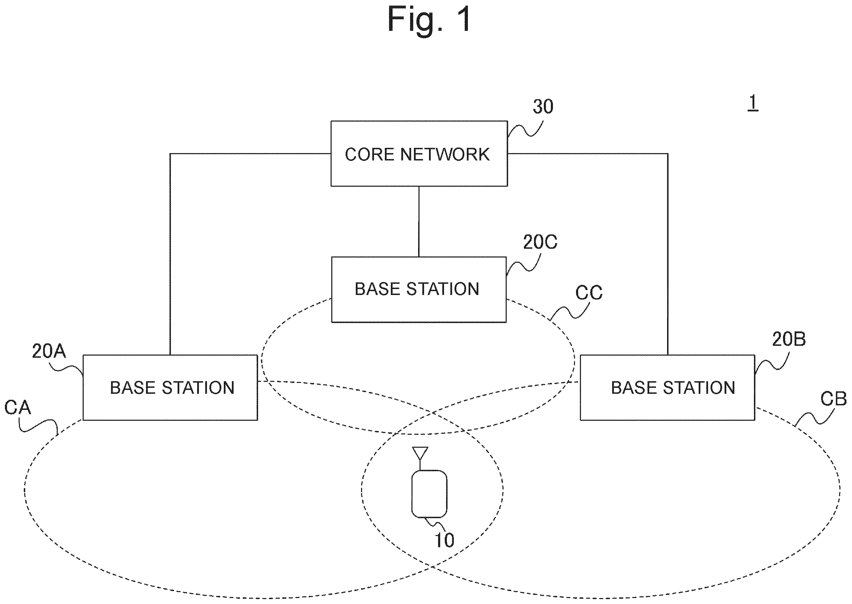

Fig. 1 is a diagram illustrating an example of the overview of a wireless communication system according to the present embodiment. As illustrated in Fig. 1, a wireless communication system 1 may include a terminal 10, base stations 20A to 20C, and a core network (CN) 30. In the following, when the base stations 20A to 20C are not distinguished from one another, the base stations are collectively called a base station 20.

The terminal 10 is a given terminal or equipment such as a smartphone, a personal computer, an in-vehicle terminal, an in-vehicle device, a stationary device, or a telematics control unit (TCU). The terminal 10 may also be called user equipment (UE), a mobile station (MS), a terminal (User Terminal), a radio apparatus, a subscriber terminal, an access terminal, or the like. The terminal 10 may be of a mobile type or a fixed type.

The terminal 10 is configured communicably using, for example, at least one of E-UTRA and NR as RAT for the base station 20. However, the terminal 10 is not limited thereto, and may be configured communicably using RAT in the 6th generation or later. Further, the terminal 10 is not limited to access to the base station 20 through an access network defined by the 3GPP mentioned above (3GPP access network), and the terminal 10 may also access the base station 20 through a non-3GPP access network such as Wi-Fi.

The base station 20 forms one or more cells, respectively, to communicate with the terminal 10 using each of the cells. The cell may be mutually rephrased as a serving cell, a carrier, a component carrier (CC), and the like. For example, each of the base stations 20A to 20C forms one cell CA-CC, respectively, in Fig. 1, but it is not limited thereto, and each base station 20 may also form one or more cells.

The base station 20 may also be called a gNodeB(gNB), an en-gNB, an eNodeB(eNB), an en-gNB, a Radio Access Network (RAN), an Access Network (AN), a Next Generation-Radio Access Network (NG-RAN) node, an NG-RAN, an E-UTRAN, a lower-power node, a Central Unit (CU), a Distributed Unit (DU), a gNB-DU, a Remote Radio Head (RRH), or an Integrated Access and Backhaul/Backhauling (IAB) node. The base station 20 is not limited to one node, and may be composed of two or more nodes (for example, a combination of a lower node such as DU and an upper node such as CU).

The CN 30 is an Evolved Packet Core (EPC) as the 4th generation CN or a 5G Core Network (5GC) as the fifth generation CN, but the CN 30 is not limited thereto. For example, various CNs in the sixth generation and later can be used as the CN 30. A device on the CN 30 (hereinafter also called a "core network device") performs mobility management such as paging and location registration of the terminal 10. The core network device may also be connected to the base station 20 through a given interface (for example, S1 or NG interface).

For example, the core network device may include at least one of an Access and Mobility Management Function (AMF) for managing C-plane information (for example, information about access and mobility management), a User Plane Function (UPF) for controlling the transmission of U-plane information (for example, user data), a Mobility Management Entity (MME), and a Gateway (GW).

Note that the numbers of terminals 10 and base stations 20 illustrated in Fig. 1 are not limited to those illustrated. Note that plural base stations 20 are connected to one another through a given interface (for example, X2 or Xn interface).

In the wireless communication system 1, the terminal 10 receives a downlink (DL) signal from the base station 20 and/or transmits an uplink (UL) signal. In the terminal 10, one or more cells are configured, and at least one of the configured cells is activated. The maximum bandwidth of each cell is, for example, 20 MHz, 400 MHz, or the like.

The terminal 10 can perform communication using Carrier Aggregation (CA) for aggregating two or more cells of one base station 20, and/or by connecting to plural Cell Groups (CGs) formed respectively by the plural base stations 20. For example, in the case of dual connectivity (DC) to connect to two base stations 20, one base station 20 is called a Master Node (MN), and the other base station 20 is called a Secondary Node (SN). The CG formed by the MN is called a Master Cell Group (MCG), and the CG formed by the SN is called a Secondary Cell Group (SCG). The MCG and the SCG may also be called a first cell group and a second cell group, respectively.

Each of the MCG and the SCG may include at least a Primary Cell (PCell), and one or more Secondary Cells (SCells). The PCell of the SCG is also called a Primary SCG Cell (PSCell). Further, the PCell of the MCG or the SCG is also called a Special Cell (SpCell). The SpCell and one or more SCells in each CG are aggregated by the CA. Each CG corresponds to a Medium Access Control (MAC) entity of each base station 20. A message on a Radio Resource Control (RRC) layer (hereinafter called an RRC message") is transmitted and/or received through the SpCell of each CG. Further, reconfiguration with sync is performed in the SpCell of each CG.

RAT used by the MN and the SN to communicate with the terminal 10 may be the same or be different. For example, the DC in which the MN uses E-UTRA and the SN uses NR is called E-UTRA-NR Dual Connectivity (EN-DC) or NG-RAN E-UTRA-NR Dual Connectivity (NGEN-DC). Further, the DC in which the MN uses NR and the SN uses E-UTRA is called NR-E-UTRA Dual Connectivity (NE-DC). The DC in which both the MN and the SN use NR is also called NR-NR Dual Connectivity (NR-DC). The EN-DC, the NGEN-DC, the NE-DC, and the NR-DC are also called Multi-Radio Dual Connectivity (MR-DC) collectively.

In the wireless communication system 1 described above, the conditional procedure performed by the terminal 10 as mentioned above is considered. For example, in the DC, Conditional PSCell Addition and/or Change (CPAC) is so considered that the terminal 10 determines whether or not the execution condition for the PSCell candidate cell is fulfilled to execute the addition and/or change of the above PSCell based on the determination result.

### (CPA)

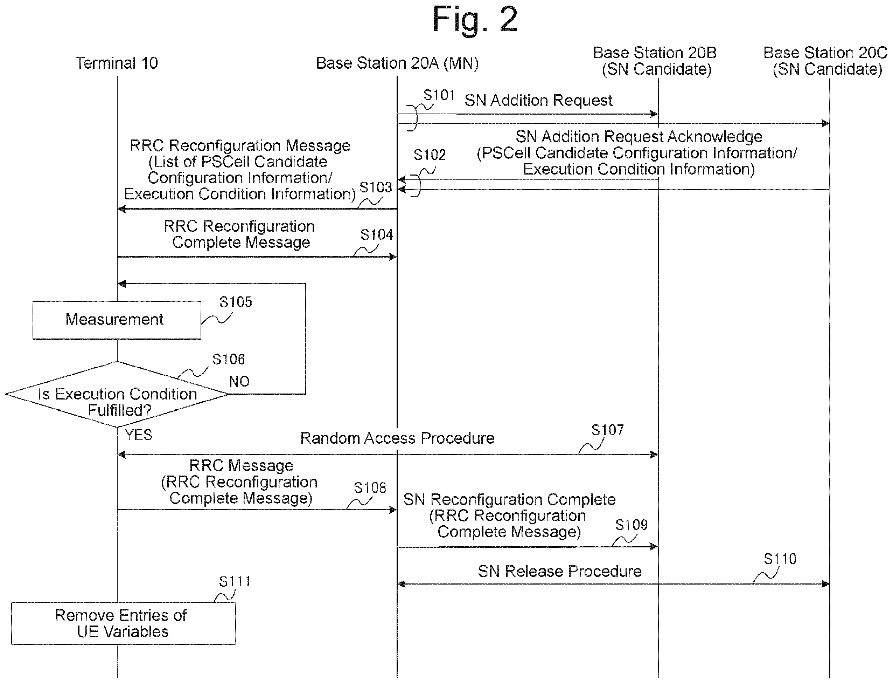

Fig. 2 is a chart illustrating an example of Conditional PSCell Addition (CPA). For example, in Fig. 2, when the base station 20A is the MN, it is illustrated a procedure in which the terminal 10 adds an SN with the base stations 20B and 20C as base stations 20 that become candidates for the SN (hereinafter called "SN candidates"). Specifically, a procedure to perform CPA using the cell CA of the base station 20A as the PCell and the respective cells CB and CC of the base stations 20B and 20C as PSCell candidate cells (hereinafter called "PSCell candidates") is illustrated.

In step S101 of Fig. 2, the base station 20A as the MN determines to perform CPA, and transmits an SN Addition Request to the base stations 20A and 20B as SN candidates. Here, the SN Addition Request is a message for requesting the addition of an SN or a PSCell, which is also called "S-NODE ADDITION REQUEST" or "SgNB Addition Request." The SN Addition Request may be transmitted for each PSCell candidate. For example, since the PSCell candidates are respective cells CB and CC of the base stations 20B and 20C in Fig. 2, the SN Addition Request is transmitted for the cells CB and CC, respectively.

The SN Addition Request may include, for example, an identifier (for example, the cell ID) of each of the PSCell candidates, the identifier of the terminal 10, and information used in each SN candidate (for example, RRC IE "CG-Configlnfo"). As the information, for example, there are information about the capabilities of the terminal 10, information about the measurement result of each cell in the terminal 10, and the like.

In step S102, the base stations 20B and 20C transmit SN Addition Request Acknowledge to the base station 20A in response to the above SN Addition Request. Here, the Addition Request Acknowledge is a message to accept the addition of the SN or the PSCell, which is also called "S-NODE ADDITION REQUEST ACKNOWLEDGE" or "SgNB Addition Request Acknowledge." The SN Addition Request Acknowledge may be transmitted for each PSCell candidate. For example, in Fig. 2, respective SN Addition Request Acknowledges of the cells CB and CC are transmitted.

The SN Addition Request Acknowledge may include, for example, (1) information about the configuration of each PSCell candidate (hereinafter called "PSCell Candidate Configuration Information"), and (2) information about the execution condition (hereinafter called "Execution Condition Information"). The PSCell Candidate Configuration Information and the Execution Condition Information may be generated in each SN candidate and included in configuration information about the SCG (for example, RRC IE "CG-Config"). The Execution Condition Information may be generated in the SN candidate and included in the SN Addition Request Acknowledge, or generated in the MN without being generated in the SN candidate. When the Execution Condition Information is generated in the MN, the SN Addition Request Acknowledge may include the PSCell Candidate Configuration Information without including the Execution Condition Information. The PSCell Candidate Configuration Information may include an RRC Reconfiguration Message. The RRC Reconfiguration Message is a message used for reconfiguration of the RRC connection of the terminal 10, which is also called "RRCReconfiguration" or "RRCConnectionReconfiguration." The RRC Reconfiguration Message is used for configuration of PSCell candidates in the terminal 10.

In step S103, the base station 20A transmits, to the terminal 10, the RRC Reconfiguration Message including PSCell Candidate Configuration Information and Execution Condition Information of one or more PSCell candidates. The PSCell Candidate Configuration Information (for example, RRC IE "CondRRCReconfig") may be based on PSCell Candidate Configuration Information included in SN Addition Request Acknowledge from one or more SN candidates (for example, which may also include RRC Reconfiguration Messages transmitted from one or more SN candidates to the MN). Further, the Execution Condition Information (for example, RRC IE "CondExecutionCond") may be based on Execution Condition Information included in SN Addition Request Acknowledges from one or more SN candidates, or generated in the MN. Each piece of PSCell Candidate Configuration Information and Execution Condition Information may also be included as an entry (for example, RRC IE "CondReconfigToAddMod") of a given list (for example, RRC IE "CondReconfigToAddModList"). The terminal 10 may store the list in UE variables (for example, "VarConditionalReconfig").

Further, the RRC Reconfiguration Message or each piece of PSCell Candidate Configuration Information in the RRC Reconfiguration Message of step S103 may also include information about measurement configuration in the terminal 10 (hereinafter called "Measurement Configuration Information," which is, for example, RRC IE "MeasConfig"). The Measurement Configuration Information may be generated in the MN. The MN may generate the Measurement Configuration Information based, for example, on the PSCell Candidate Configuration Information. The Measurement Configuration Information may include, for example, at least one of the following:
(1) a list (for example, RRC IE "MeasObjectToAddModList") including information about one or more Measurement Objects (hereinafter called "Measurement Object Information");
(2) a list (for example, RRC IE "ReportConfigToAddModList") including information about a Report (hereinafter called "Report Information"); and
(3) a list (for example, RRC IE "MeasIdToAddModList") of information about association between Measurement Object Information and Report Information (hereinafter called "Association Information"). The terminal 10 may store the list of Measurement Object Information, the list of Report Information, and the list of Association Information included in the above-mentioned Measurement Configuration Information respectively in the UE variables (for example, "measObjectList," "reportConfigList," and "measIdList" of "VarMeasConfig").

Each piece of Measurement Object Information (for example, RRC IE "MeasObject") may indicate, for example, identifiers, frequencies, and the like of cells as measurement objects (for example, plural cells including the PSCell candidates mentioned above). The Association Information between the Measurement Object Information (for example, RRC IE "measObject") and the Report Information (for example, RRC IE "reportConfig") may also include, for example, the identifier of the Measurement Object Information (for example, RRC IE "measObjectld"), the identifier of the Report Information (for example, RRC IE "reportConfigld"), and the identifier of the Association Information (hereinafter called "association identifier," which is, for example, RRC IE "measld").

Each piece of Report Information (for example, RRC IE "reportConfig") may also include information about an event that triggers a conditional procedure (for example, CPA) (hereinafter called "Event Trigger Information," which is, for example, RRC IE "CondTriggerConfig"). The event concerned may be, for example:
(A3) that the measurement result of each PSCell candidate gets better than the measurement result of each PCell and/or PSCell by an offset amount; or
(A4) that the measurement result of the PSCell candidate gets better than a threshold value; or
(A5) that the measurement result of the PCell and/or the PSCell gets worse than a threshold value T1, and the PSCell candidate gets better than a threshold value T2; or
(B1) that the measurement result of an adjacent cell of different RAT (from a serving cell) gets better than a threshold value.

Further, each piece of Execution Condition Information (for example, RRC IE "CondExecutionCond") may also include, for example, an association identifier (for example, RRC IE "measld") between the Measurement Object Information and the Report Information mentioned above. The fact that "the execution condition is fulfilled" may also mean that an event (for example, the event (A3) or (A5) mentioned above) indicated by the Event Trigger Information in the Report Information indicated by the association identifier occurs.

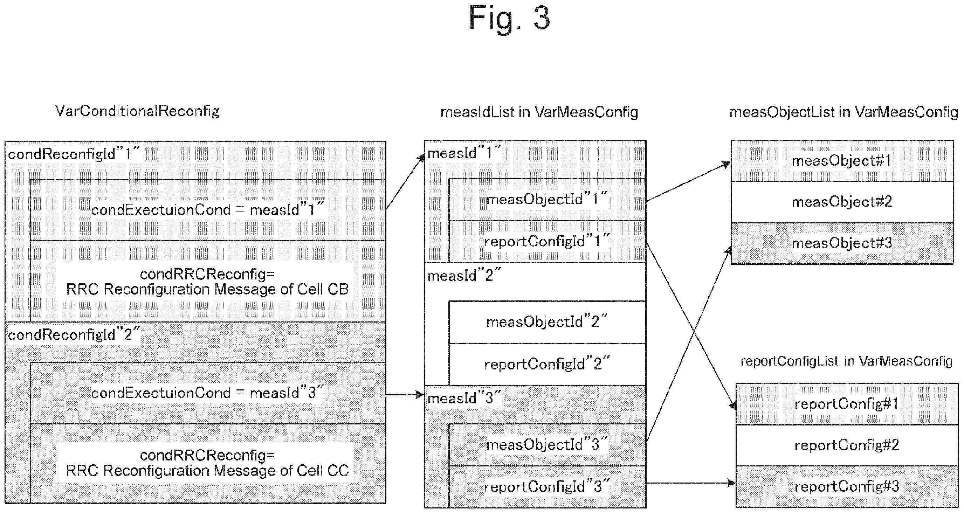

Fig. 3 is a diagram illustrating an example of UE variables. For example, in Fig. 3, an example of storing, in UE variable "VarConditionalReconfig," a list (for example, RRC IE "CondReconfigToAddModList") including PSCell Candidate Configuration Information and Execution Condition Information of the respective cells CB and CC of the base stations 20B and 20C received by the terminal 10 in the RRC Reconfiguration Message from the base station 20A is illustrated.

As illustrated in Fig. 3, in the UE variables "VarConditionalReconfig," each ID (for example, RRC IE "condReconfigld") of a combination of the PSCell Candidate Configuration Information and the Execution Condition Information of the respective cells CB and CC, and the PSCell Candidate Configuration Information (for example, RRC IE "CondRRCReconfig") and the Execution Condition Information (for example, RRC IE "CondExecutionCond") are stored.

Further, in "measObjectList" inside the UE variables "VarMeasConfig," a list of the above-mentioned Measurement Object Information (for example, RRC IE "MeasObjectToAddModList") is stored. Further, in "reportConfigList" inside the UE variables "VarMeasConfig," a list of the above-mentioned Report Information (for example, RRC IE "ReportConfigToAddModList") is stored. Further, in "measIdList" inside the UE variables "VarMeasConfig," a list of Association Information between the Measurement Object Information and the Report Information mentioned above (for example, RRC IE "MeasIdToAddModList") is stored.

As illustrated in Fig. 3, Execution Condition Information of the cell CB corresponding to condReconfigld"1" in the UE variables "VarConditionalReconfig" indicates Association Information with an association identifier (measld) "1" in "measIdList" inside the UE variables "VarMeasConfig." The Association Information indicates Measurement Object Information (measObject) #1 and Report Information (reportConfig) #1. In this case, the terminal 10 performs a measurement for CPA of the cell CB based on the Measurement Object Information #1. Further, when an event indicated by the Event Trigger Information in the Report Information #1 occurs, the terminal 10 determines that the execution condition for CPA of the cell CB is fulfilled.

On the other hand, Execution Condition Information of the cell CC corresponding to condReconfigld"2" in the UE variables "VarConditionalReconfig" indicates Association Information with an association identifier (measld) "3" in "measIdList" inside the UE variables "VarMeasConfig." The Association Information indicates Measurement Object Information (measObject) #3 and Report Information (reportConfig) #3. In this case, the terminal 10 performs a measurement for CPA of the cell CC based on the Measurement Object Information #3. Further, when an event indicated by the Event Trigger Information in the Report Information #3 occurs, the terminal 10 determines that the execution condition for CPA of the cell CC is fulfilled.

In step S104 of Fig. 2, the terminal 10 transmits an RRC Reconfiguration Complete Message in response to the RRC Reconfiguration Message from the base station 20A in step S103. The RRC Reconfiguration Message is also called "RRCReconfigurationComplete" or "RRCConnectionReconfigurationComplete."

In step S105, the terminal 10 performs measurements in cells as measurement objects. Specifically, the terminal 10 may perform the measurements in the cells based on the Measurement Object Information mentioned above. For example, as described with reference to Fig. 3, the terminal 10 may also perform measurements of the cells indicated by Measurement Object Information #1 and #3 for CPA of the cells CB and CC of the PSCell candidates, respectively.

In step S106, the terminal 10 determines whether or not the execution condition of each of the PSCell candidates is fulfilled. Specifically, the terminal 10 may determine whether or not the execution condition of each of the PSCell candidates is fulfilled based on the measurement result in step S105 and the Report Information mentioned above. For example, as described with reference to Fig. 3, the terminal 10 may also determine whether or not an event indicated by the Event Trigger Information respectively in the Report Information #1 and #3 occurs for CPA of the cells CB and CC of the PSCell candidates.

When the execution condition of any of the PSCell candidates is not fulfilled (step S106: NO), the operation returns to step S105 and the terminal 10 continues measurement.

When the execution condition of at least one of the PSCell candidates is fulfilled (step S106: YES), the terminal 10 starts a random access procedure in step S107 for the PSCell candidate that fulfills the execution condition. For example, in Fig. 2, since the execution condition of the cell CB of the PSCell candidate is fulfilled, the terminal 10 starts the random access procedure for the cell CB based on the PSCell Candidate Configuration Information of the cell CB (for example, condRRCReconfig of condReconfigld"1" in the UE variables "VarConditionalReconfig" of Fig. 3). Note that, when the execution condition of two or more PSCell candidates is fulfilled, the terminal 10 may select one of the two or more PSCell candidates and start the random access procedure for the selected PSCell candidate.

In step S108, when the RRC connection with the base station 20B (cell CB) is established, the terminal 10 transmits, to the base station 20A, an RRC Message to notify that the cell CB is configured as the PSCell. The RRC Message may also include an RRC Reconfiguration Complete Message in response to the RRC Reconfiguration Message of the cell CB included in the PSCell Candidate Configuration Information of step S102.

The RRC Message including the above RRC Reconfiguration Complete Message is a Measurement Report ("MeasurementReport") triggered, for example, by fulfilling the execution condition in step S106, or an RRC Setup Complete Message ("RRCSetupComplete" or "RRCConnectionSetupComplete") in response to an RRC Setup Message ("RRCSetup" or "RRCConnectionSetup") received from the base station 20B in the random access procedure of step S107, but it is not limited to either of them, and it may be any other RRC message.

In step S109, the base station 20A transmits SN Reconfiguration Complete to the base station 20B that forms the cell CB. The SN Reconfiguration Complete is a message to notify that the PSCell Candidate Configuration Information generated in the SN candidate is applied in the terminal 10, which is also called "S-NODE RECONFIGURATION COMPLETE" or "SgNB Reconfiguration Complete," for example. The SN Reconfiguration Complete includes the RRC Reconfiguration Complete Message of the cell CB received from the terminal 10 in step S108.

In step S110, the base station 20A carries out an SN release procedure with an SN candidate (here, the base station 20C) that forms an SPCell candidate not configured as the PSCell. For example, the base station 20A transmits an SN Release Request to the base station 20C. The SN Release Request is a message to request release of PSCell Candidate Configuration Information for an SPCell candidate (here, the cell CC) generated in the SN candidate, which is also called "S-NODE RELEASE REQUEST" or "SgNB Release Request."

As described above, when the execution condition of the cell CB is fulfilled and the cell CB is added as the PSCell, the terminal 10 removes specific entries of the UE variables in step S111. Specifically, the terminal 10 may remove PSCell Candidate Configuration Information and Execution Condition Information of all PSCell candidates (for example, all entries of "VarConditionalReconfig" of Fig. 3). Further, the terminal 10 may remove Report Information (for example, reportConfig #1 and #3 of Fig. 3) indicated based on the above Execution Condition Information in the UE variables (for example, "reportConfigList" of "VarMeasConfig" of Fig. 3). Further, the terminal 10 may remove Measurement Object Information (for example, measObject #1 and #3 of Fig. 3) based on the above Execution Condition Information in the UE variables (for example, "measObjectList" of "VarMeasConfig" of Fig. 3). Further, the terminal 10 may remove Association Information (for example, a set of Measld"1", mesasObjectld"1", and reportConfigld"1", and a set of Measld"3", mesasObjectld"3", and reportConfigId"1" of Fig. 3) indicated by the above Execution Condition Information in the UE variables (for example, "measIdList" of "VarMeasConfig" of Fig. 3).

### (CPC)

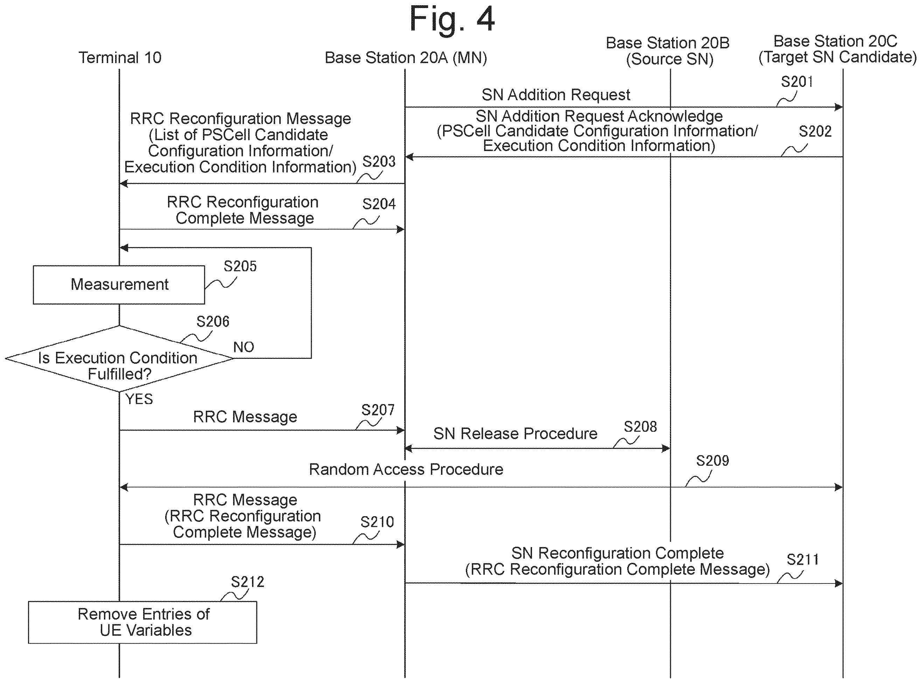

Fig. 4 is a chart illustrating an example of PSCell Change (Conditional PSCell Change: CPC). For example, in Fig. 4, when the terminal 10 performs DC using the base station 20A as the MN and the base station 20B as a source SN, a procedure to change the SN on the initiative of the MN using the base station 20C as a candidate for a target SN (hereinafter called "target SN candidate") is illustrated. In other words, when the cell CA of the base station 20A is the PCell and the cell CB of the base station 20B is the PSCell, a procedure to perform CPC using the cell CC of the base station 20C as a PSCell candidate is illustrated.

Note that description will be made in Fig. 4 by focusing on differences from Fig. 2 without repeating similar description. Further, CPA in the description of Fig. 2 is replaced with CPC in Fig. 4. Further, the "cells CB and CC" of the PSCell candidates in the description of Fig. 2 are replaced with the "cell CC" and applied in Fig. 4.

In step S201 of Fig. 4, the base station 20A as the MN determines to perform CPC, and transmits an SN Addition Request to the base station 20C as a target SN candidate. For example, in Fig. 4, since the PSCell candidate is the cell CC of the base station 20C, the SN Addition Request for the cell CC is transmitted.

In step S202, the base station 20C transmits SN Addition Request Acknowledge to the base station 20A in response to the above SN Addition Request. For example, in Fig. 4, the SN Addition Request Acknowledge including the PSCell Candidate Configuration Information and/or the Execution Condition Information of the cell CC is transmitted.

Step S203 to step S206 of Fig. 4 are the same as step S103 to step S106 of Fig. 2. When the execution condition of at least one PSCell candidate is fulfilled (YES in step S206), the terminal 10 transmits, in step S207, an RRC message to trigger a PSCell change to the PSCell candidate that fulfills the execution condition. The RRC message may be, for example, a measurement report triggered by fulfilling the execution condition in step S206.

In step S208, the base station 20A carries out an SN release procedure with the base station 20B as the source SN in response to the RRC message from the terminal 10. By the SN release procedure, data transmission and/or reception with the terminal 10 using the base station 20B as the SN are stopped. Steps S210, S211, and S212 are the same as steps S108, S109, and S111 of Fig. 2.

Though not illustrated, CPC may also be performed on the initiative of the SN. In the case of the SN initiative, a step in which the base station 20B as the source SN transmits an SN change request to the base station 20A as the MN only has to be added before step S201 of Fig. 4. The SN change request is a message to request an SN change, which may also be called "S-NODE CHANGE REQUIRED" or "SgNB Change Required."

As described above, in the conditional procedure (for example, CPAC), the terminal 10 receives an RRC Reconfiguration Message including one or more pieces of PSCell Candidate Configuration Information (information about configuration of candidate cells), and Execution Condition Information (information about the execution condition of a specific procedure for the candidate cells). Based on the PSCell candidate configuration procedure and the Execution Condition Information, the terminal 10 controls the execution of the specific procedure. In such a conditional procedure, since one or more candidate cells are pre-configured in the terminal 10, if it is determined that the execution condition of a certain candidate cell is fulfilled, the execution of the specific procedure for the certain candidate cell can be started quickly. As a result, it can be expected to improve mobility performance (for example, suppression of processing delay and/or communication interruption time).

However, in the above conditional procedure, the terminal 10 continues determination-related processing to determine whether or not the execution condition of candidate cells is fulfilled until a candidate cell that fulfills the execution condition is found. For example, in CPAC, measurements in candidate cells (for example, at least one of Inter-RAT measurement, Intra-RAT measurement, Inter-frequency measurement, and Intra-frequency measurement), and determination-related processing such as determination based on the measurement results are continued until a candidate cell that fulfills the execution condition is found. As a result, there is a risk of increasing the power consumption of the terminal.

Further, even if the above conditional procedure fails in the terminal 10, the network (for example, the base station 20, the CN 30, and the like) cannot know the reason for the failure of the conditional procedure in the terminal 10. Therefore, the network cannot take measures to prevent the failure (for example, coordination of PSCell Candidate Configuration Information and/or Execution Condition Information) properly, and as a result, there is a risk that the resource utilization efficiency of the entire system decreases.

Therefore, in the present embodiment, (1) determination-related processing to determine whether or not the execution condition is fulfilled is restricted by using a timer and/or (2) information about the reason for the failure of the conditional procedure (hereinafter called "failure reason information") is notified from the terminal 10 to the network. By using the above timer, the power consumption of the terminal 10 when any candidate cell that fulfills the execution condition cannot be found can be suppressed. Further, by notifying the above failure reason information, since the network side can take measures, the resource utilization efficiency of the entire system can be improved.

### (1) Restrictions of Determination-Related Processing of Execution Condition Using Timer

The terminal 10 receives an RRC Reconfiguration Message including PSCell Candidate Configuration Information and Execution Condition Information of one or more PSCell candidates. The terminal 10 starts the time in response to receiving the RRC Reconfiguration Message, and when the timer expires, the terminal 10 removes the PSCell Candidate Configuration Information and the Execution Condition Information.

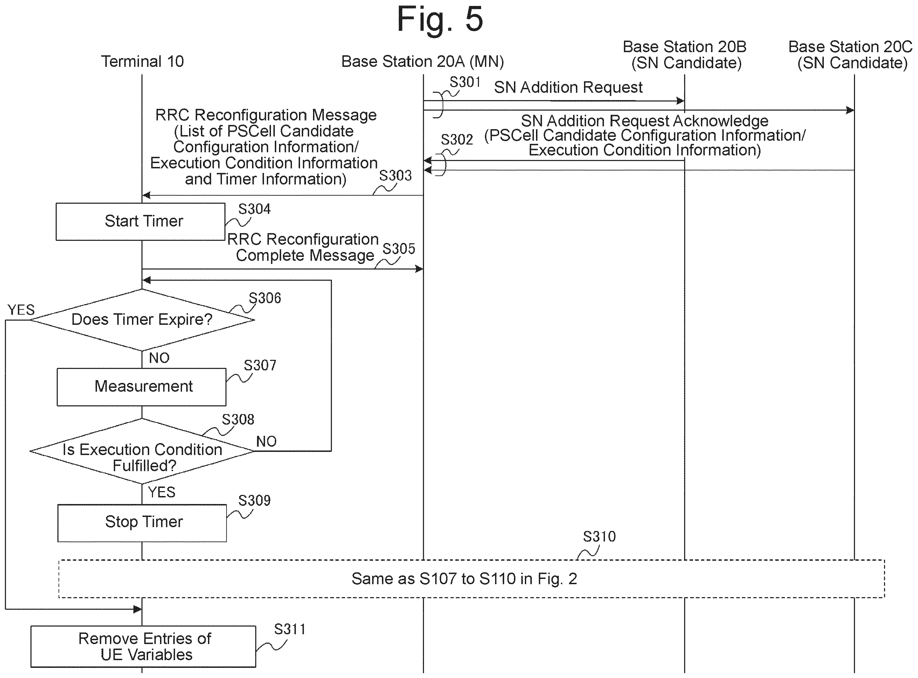

Fig. 5 is a chart illustrating an example of CPA using the timer according to the present embodiment. In Fig. 5, description will be made by focusing on differences from Fig. 2. Step S301 to step S303 of Fig. 5 are the same as step S101 to step S103 of Fig. 2.

In step S304, the terminal 10 starts the timer in response to receiving, from the base station 20A, an RRC Reconfiguration Message including a list of one or more pieces of PSCell Candidate Configuration Information and Execution Condition Information (for example, RRC IE "CondReconfigToAddModList"). The RRC Reconfiguration Message may also include information about the timer (hereinafter "timer information"). The timer information may indicate, for example, the timer value or period. Note that the value or period of the timer may be set commonly for all PSCell candidates of the terminal 10 or dedicatedly for each PSCell candidate of the terminal 10. Step S305 is the same as step S104 of Fig. 2.

In step S306, the terminal 10 determines whether or not the timer started in step S304 expires. When the timer does not expire (step S306: NO), the terminal 10 measures cells as measurement objects in step S307, and determines whether or not the execution condition of each PSCell candidate is fulfilled in step S308. Note that the details of the measurements of step S307 and the determination of step S308 are the same as those of step S105 and step S106 of Fig. 2.

When the execution condition of at least one of PSCell candidates is fulfilled (step S308: YES), the terminal 10 stops the timer in step S309 after started in step S304. In step S310, the terminal 10 operates as described in step S107 to step S110 of Fig. 2, and proceeds to step S311.

On the other hand, when the execution condition of any PSCell candidate is not fulfilled (step S308: NO), this operation returns to step S306, and the terminal 10 determines whether or not the timer started in step S304 expires. When the timer expires (step S306: YES), this operation proceeds to step S311. Step S311 is the same as step S111 of Fig. 2.

Thus, in Fig. 5, even though the execution condition of any PSCell candidate is not fulfilled in step S308, when it is determined in step S306 that the timer expires, the terminal 10 removes the PSCell Candidate Configuration Information and the Execution Condition Information in step S311. In other words, since the terminal 10 stops the determination-related processing for CPA in response to the expiry of the timer, the power consumption of the terminal 10 can be suppressed.

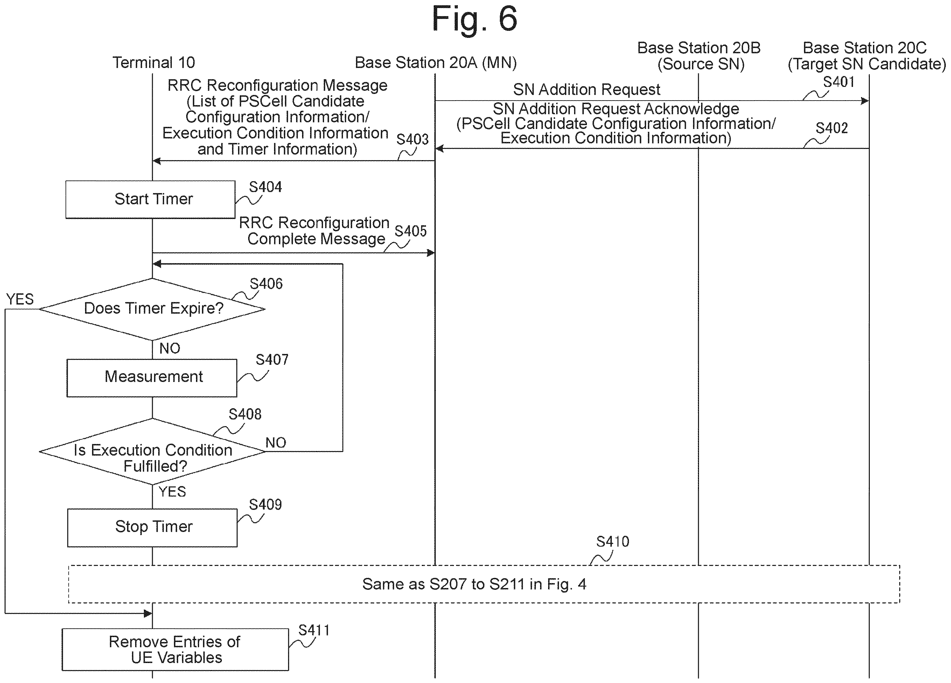

Fig. 6 is a chart illustrating an example of CPC using the timer according to the present embodiment. In Fig. 6, description will be made by focusing on differences from Fig. 4 and Fig. 5. Step S401 to step S403 of Fig. 6 are the same as step S201 to step S203 of Fig. 4.

In step S404, the terminal 10 starts the timer in response to receiving, from the base station 20A, an RRC Reconfiguration Message including a list of one or more pieces of PSCell Candidate Configuration Information and Execution Condition Information (for example, RRC IE "CondReconfigToAddModList"). The RRC Reconfiguration Message may also include the timer information mentioned above. Step S405 is the same as step S204 of Fig. 4.

In step S406, the terminal 10 determines whether or not the timer started in step S404 expires. When the timer does not expire (step S406: NO), the terminal 10 measures cells as measurement objects in step S407, and determines whether or not the execution condition of each PSCell candidate is fulfilled in step S408. Note that the details of the measurements of step S407 and the determination of step S408 are the same as those of step S205 and step S206 of Fig. 2.

When the execution condition of at least one PSCell candidate is fulfilled (step S408: YES), the terminal 10 stops the timer in step S309 after started in step S404. In step S410, the terminal 10 operates as described in step S207 to step S211 of Fig. 4, and proceeds to step S411.

On the other hand, when the execution condition of any PSCell candidate is not fulfilled (step S408: NO), this operation returns to step S406, and the terminal 10 determines whether or not the timer started in step S404 expires. When the timer expires (step S406: YES), this operation proceeds to step S411. Step S411 is the same as step S212 of Fig. 4.

Thus, in Fig. 6, even though the execution condition of any PSCell candidate is not fulfilled in step S408, when it is determined in step S406 that the timer expires, the terminal 10 removes the PSCell Candidate Configuration Information and the Execution Condition Information in step S311. In other words, since the terminal 10 stops the determination-related processing for CPC in response to the expiry of the timer, the power consumption of the terminal 10 can be suppressed.

As described above, the terminal 10 starts the timer in response to receiving the RRC Reconfiguration Message including one or more pieces of PSCell Candidate Configuration Information and Execution Condition Information, and when the timer expires, the terminal 10 removes the PSCell Candidate Configuration Information and the Execution Condition Information so that the power consumption of the terminal 10 when any candidate cell that fulfills the execution condition cannot be found can be suppressed.

For example, in Fig. 5 and Fig. 6, it is also assumed that the timer is started in the network (for example, in the MN) in response to receiving the RRC Reconfiguration Complete Message instead of starting the timer in the terminal 10. In this case, when the timer started on the network side expires, signaling for removing the PSCell Candidate Configuration Information and the Execution Condition Information (for example, an RRC Reconfiguration Message from the MN to the terminal 10, and an RRC Reconfiguration Complete Message from the terminal 10 to the MN in response to the RRC Reconfiguration Message) is required. Therefore, when the timer is started in the terminal 10 as illustrated in Fig. 5 and Fig. 6, overhead related to CPAC control can be reduced compared to when the timer is started on the network side.

### (2) Notification of Failure Reason Information

The terminal 10 receives an RRC Reconfiguration Message including PSCell Candidate Configuration Information and Execution Condition Information of at least one or more PSCell candidates. The terminal 10 controls the execution of a specific procedure based on the PSCell Candidate Configuration Information and the Execution Condition Information. When the execution of the specific procedure fails, the terminal 10 transmits a message (for example, an RRC message) including failure reason information about the failure reason.

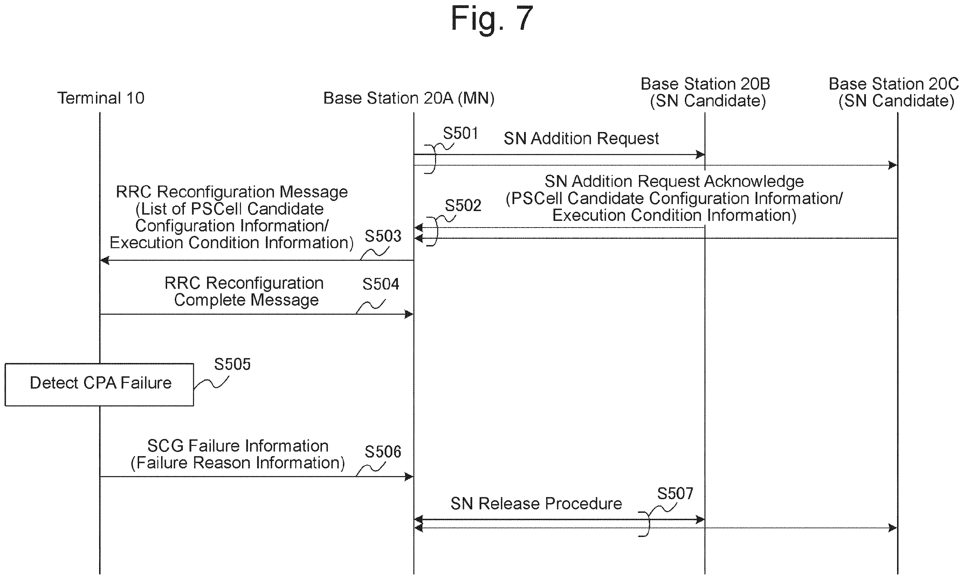

Fig. 7 is a chart illustrating an example of notification of CPA failure reason information according to the present embodiment. In Fig. 7, description will be made by focusing on differences from Fig. 2 and Fig. 5. Step S501 to step S504 of Fig. 7 are the same as step S101 to step S104 of Fig. 2 and step S301 to step S304 of Fig. 5.

In step S505, the terminal 10 detects the failure of CPA. For example, the terminal 10 may detect the failure of CPA in the case of at least one of (a) to (c):
(a) At least one of PSCell candidates configured based on the list of PSCell Candidate Configuration Information received in step S503 is not detected within a given period;
(b) At least one of PSCell candidates mentioned above is detected within the given period but the execution condition of the detected PSCell candidate is not fulfilled within the given period; and
(c) The execution condition of the detected PSCell candidate is fulfilled within the given period, but a random access procedure for the PSCell candidate that fulfills the execution condition fails.

The given period mentioned above may be a predetermined period or a period set from the network. Further, the given period mentioned above may be a period in which the timer of step S306 of Fig. 5 is started in response to receiving the RRC Reconfiguration Message in step S305 until the timer expires. Note that when the time expires in Fig. 7, step S311 of Fig. 5 may also be carried out.

In step S506, the terminal 10 transmits, to the base station 20A, SCG Failure Information including failure reason information about the reason for the failure detected in step S505. Here, the SCG Failure Information is a message to notify the failure of the procedure for the SCG, which may be an RRC message, for example. The SCG Failure Information may be rephrased as "SCGFailurelnformation" to notify the failure of the SCG procedure of NR in NR-DC, "SCGFailureinformationEUTRA" to notify the failure of the SCG procedure of E-UTRA in NE-DC, or "SCGFailurelnformationNR" to notify the failure of the SCG procedure of NR in EN-DC.

For example, the failure reason information may also indicate at least one of (a) to (c) below. When the failure reason information is (b) mentioned above, the SCG Failure Information may also include information about at least one PSCell candidate detected within the given period mentioned above. Further, when the failure reason information is (c) mentioned above, the SCG Failure Information may also include information about the PSCell candidate that fulfills the execution condition. The information about the PSCell candidate detected within the given period or that fulfills the execution condition may be, for example, identification information (for example, a physical cell ID) of the PSCell candidate or the like.

Further, the SCG Failure Information may include information about any other cell detected in the terminal 10 other than the PSCell candidate mentioned above (hereinafter called "other cell information"). The other cell information may also include identification information (for example, the physical cell ID) of the other cell detected by the terminal 10 and/or information about the measurement result of the other cell.

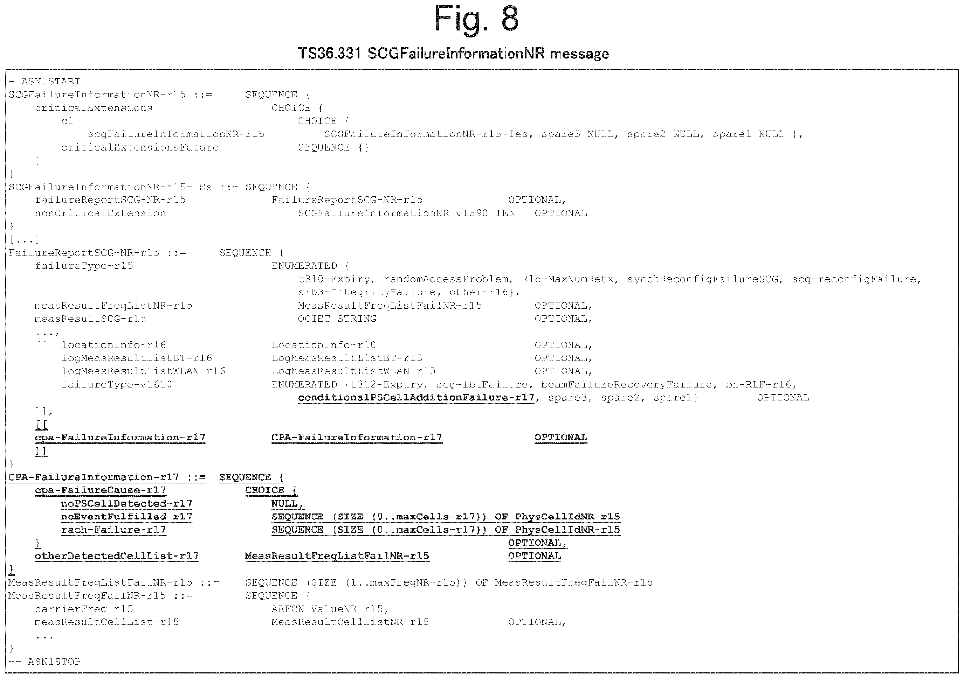

Referring to Fig. 8 to Fig. 10, examples of SCG Failure Information as mentioned above will be described. Fig. 8 is a diagram illustrating an example of SCG Failure Information in the case of EN-DC (or NGEN-DC) according to the present embodiment. For example, as illustrated in Fig. 8, "SCGFailurelnformationNR" used in EN-DC may also include failure reason information (for example, "cpa-FailureCause" in RRC IE "CPA-Failure Information"). For example, the failure reason information may include information indicative of any of (a) to (c) mentioned above (for example, (a) noPSCellDetected, (b) noEventFulfilled, or (c) rach-Failure), and the physical cell ID of the PSCell candidate in the case of (b) and (c) (for example, "PhysCellIdNR"). Further, "SCGFailurelnformationNR" may include the other cell information (for example, otherDetectedCellList).

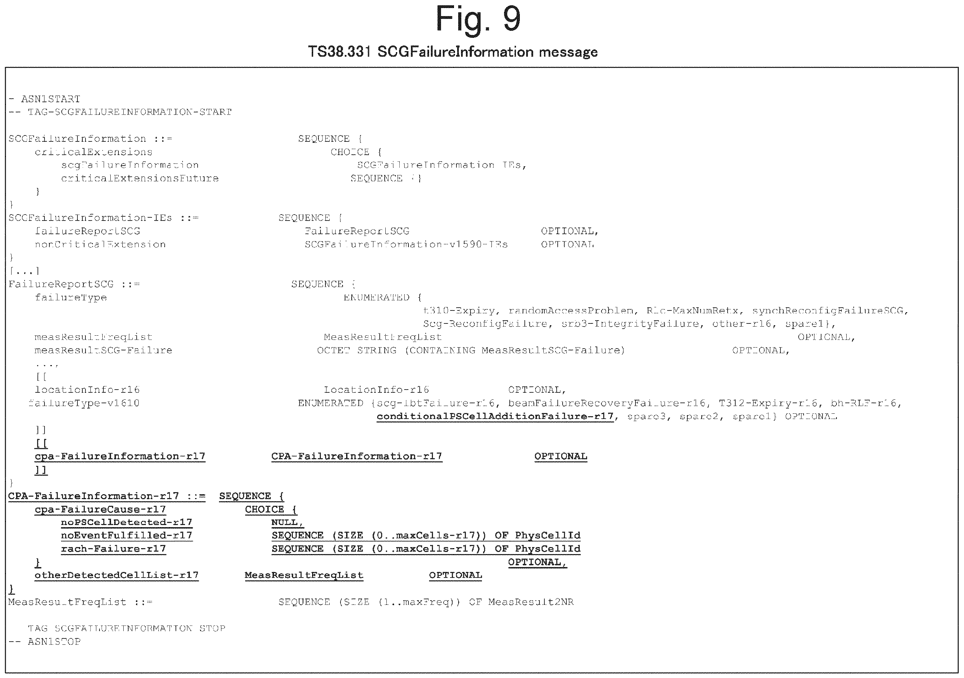

Fig. 9 is a diagram illustrating an example of SCG Failure Information in the case of NR-DC according to the present embodiment. For example, as illustrated in Fig. 9, "SCGFailurelnformation" used in NR-DC may also include failure reason information (for example, "cpa-FailureCause" in RRC IE "CPA-Failurelnformation") like in Fig. 8. Further, "SCGFailurelnformation" may include the other cell information (for example, otherDetectedCellList).

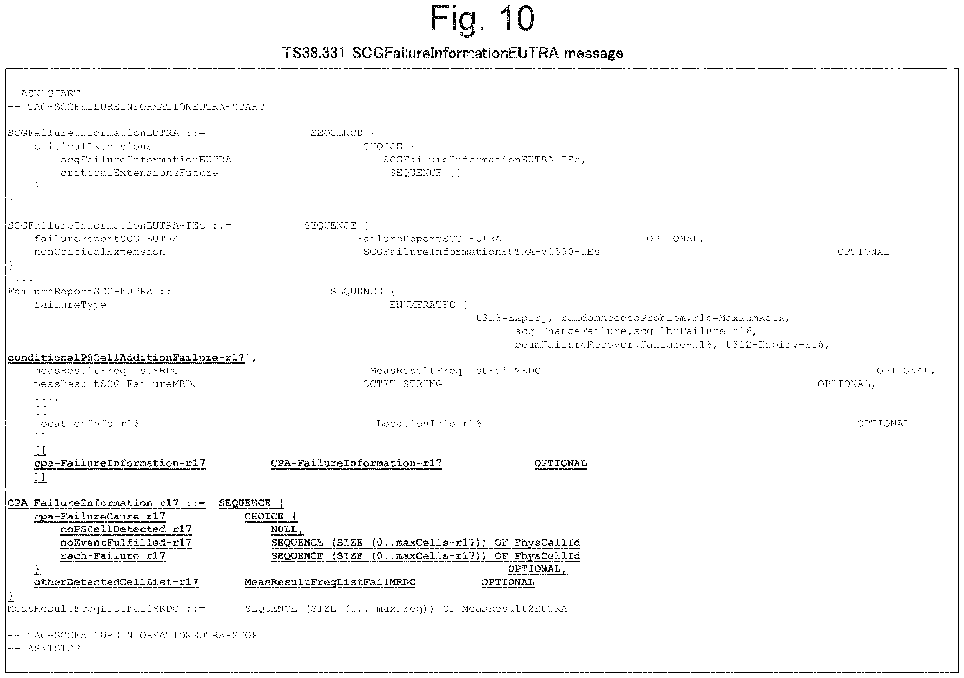

Fig. 10 is a diagram illustrating an example of SCG Failure Information in the case of NE-DC according to the present embodiment. For example, as illustrated in Fig. 10, "SCGFailurelnformationEUTRA" used in NE-DC may also include failure reason information (for example, "cpa-FailureCause" in RRC IE "CPA-Failurelnformation") like in Fig. 8. Further, "SCGFailurelnformation" may include the other cell information (for example, otherDetectedCellList).

In step S507, the base station 20A carries out an SN release procedure with an SN candidate (here, each of the base stations 20B and 20C) that forms each SPCell candidate in response to receiving the SCG Failure Information in step S506. For example, the base station 20A transmits an SN Release Request to each of the base stations 20B and 20C, respectively.

The SN Release Request may also include the failure reason information mentioned above. Based on the failure reason information in the SN Release Request, the base stations 20B and 20C as the SN candidates may control the generation of PSCell Candidate Configuration Information and/or Execution Condition Information in response to the next SN Addition Request from the MN. Thus, measures on the network side based on the failure reason information may be taken in the SN candidates.

Alternatively, based on the failure reason information and/or the other cell information included in the SCG Failure Information, the base station 20A may generate information used in each of the SN candidates (for example, RRC IE "CG-Configlnfo"). Further, based on the failure reason information and/or the other cell information, the base station 20A may determine the PSCell candidates and/or the SN candidates. Thus, measures on the network side based on the failure reason information may be taken in the MN.

Further, for example, when the above failure reason information indicates (a), the network (for example, the MN) may configure, in the terminal 10, an actually detected cell indicated by the other cell information as the PSCell candidate using the other cell information reported from the terminal 10.

Further, for example, when the above failure reason information indicates (b), the network (for example, the MN and/or the SN candidates) may review the execution condition, and review the configuration values such as threshold values. Further, for example, when the above failure reason information indicates (c), the network (for example, the MN and/or the SN candidates) can review parameters related to random access in the PSCell Candidate Configuration Information.

Thus, in Fig. 7, since CPA measures on the network side are enabled by the notification of the failure reason information in step S506, the resource utilization efficiency of the entire system can be improved.

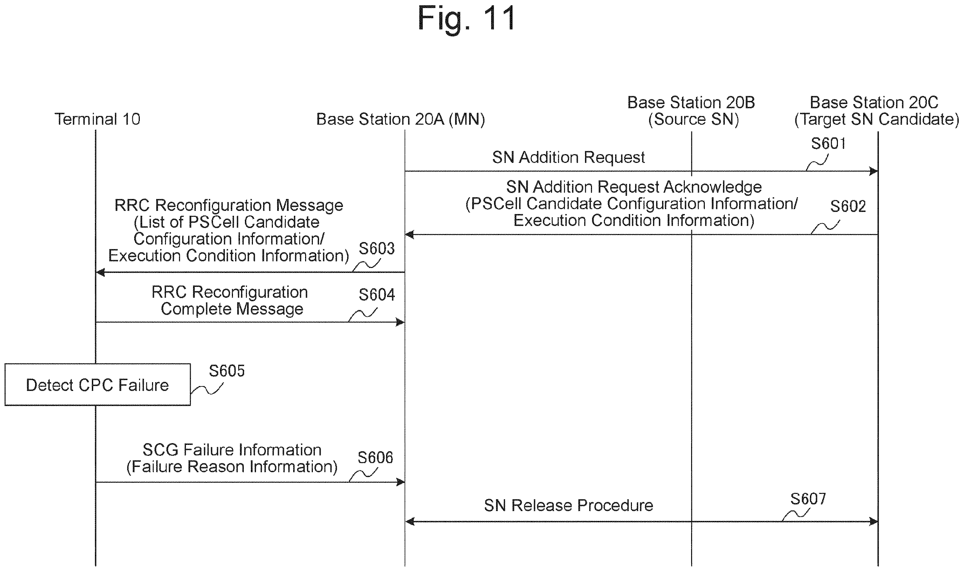

Fig. 11 is a diagram illustrating an example of notification of CPC failure reason information according to the present embodiment. In Fig. 11, description will be made by focusing on differences from Figs. 4, 6, and 7. Step S601 to step S604 of Fig. 11 are the same as step S201 to step S204 of Fig. 4.

In step S605, the terminal 10 detects the failure of CPC. For example, the terminal 10 may detect the failure of CPC in the case of at least one of (a) to (c) mentioned above as described in step S505 of Fig. 7.

In step S606, the terminal 10 transmits, to the base station 20A, SCG Failure Information including failure reason information about the reason for the failure detected in step S605. Note that the details of step S606 are the same as those of step S506 of Fig. 7. Note that the SCG Failure Information can be applied by replacing CPA illustrated in Fig. 8 to Fig. 10 with CPC.

In step S607, the base station 20A carries out an SN release procedure with an SN candidate (here, the base station 20C) that forms each SPCell candidate in response to receiving the SCG Failure Information in step S606. Note that the details of step S607 are the same as those of step S507 of Fig. 7.

Thus, in Fig. 11, since CPC measures on the network side are enabled by the notification of the failure reason information in step S606, the resource utilization efficiency of the entire system can be improved.

Note that CPA (for example, Figs. 2, 5, and 7) and CPC (for example, Figs. 4, 6, and 11) are exemplified above as examples of conditional procedures, but the present embodiment can also be applied to Conditional Hand Over (CHO) as well as CPA and CPC. In the case of CHO, candidate cells may be replaced with candidate cells for a target cell (or a target base station).

### (Configuration of Wireless Communication System)

Next, the configuration of each equipment of the wireless communication system 1 as mentioned above will be described. Note that the following configuration is to indicate a configuration necessary in the description of the present embodiment, and inclusion of any functional block in each equipment other than those illustrated is not excluded.

### <Hardware Configuration>

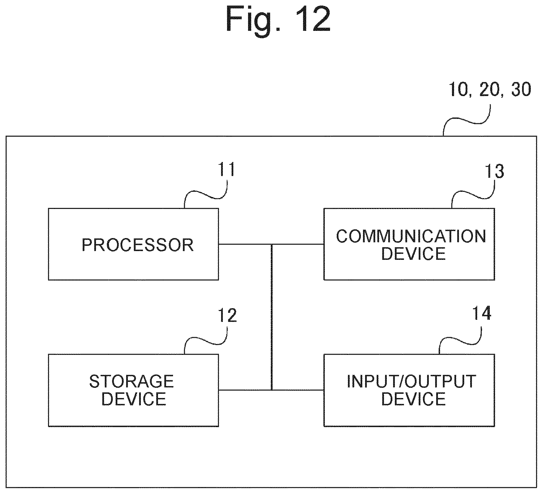

Fig. 12 is a diagram illustrating an example of the hardware configuration of each equipment in the wireless communication system according to the present embodiment. Each equipment in the wireless communication system 1 (for example, the terminal 10, the base station 20, or the CN 30) includes a processor 11, a storage device 12, a communication device 13 for performing wired or wireless communication, and an input/output device 14 for accepting various input operations and outputting various information.

The processor 11 is, for example, a CPU (Central Processing Unit) to control each equipment in the wireless communication system 1. The processor 11 may read a program from the storage device 12 to perform various processing to be described in the present embodiment. Each equipment in the wireless communication system 1 may also be configured to include one or more processors. Further, each equipment concerned may also be called a computer.

The storage device 12 is composed, for example, of storages such as a memory, an HDD (Hard Disk Drive), and/or an SSD(Solid State Drive). The storage device 12 may also store various information required to perform processing by the processor 11 (for example, programs and the like executed by the processor 11).

The communication device 13 is a device for performing communication through wired and/or wireless networks, which may include a network card, a communication module, a chip, an antenna, and the like, for example. Further, an amplifier, an RF (Radio Frequency) device for performing processing on radio signals, and a BB (BaseBand) device for performing processing on baseband signals may be included in the communication device 13.

The RF device performs D/A conversion, modulation, frequency conversion, power amplification, and the like on a digital baseband signal, for example, received from the BB device to generate a radio signal to be transmitted from the antenna. Further, the RF device performs frequency conversion, demodulation, A/D conversion, and the like on a radio signal received from the antenna to generate and transmit a digital baseband signal to the BB device. The BB device performs processing for converting the digital baseband signal to a packet and processing for converting the packet to a digital baseband signal.

The input/output device 14 includes input devices such as a keyboard, a touch panel, a mouse, and/or a microphone, and output devices such as a display and/or a speaker.

The hardware configuration described above is just an example. In each equipment in the wireless communication system 1, part of hardware illustrated in Fig. 12 may be omitted, or any other hardware unillustrated in Fig. 12 may be included. Further, the hardware illustrated in Fig. 12 may be configured by one or more chips.

### <Functional Block Configuration>

### «Terminal»

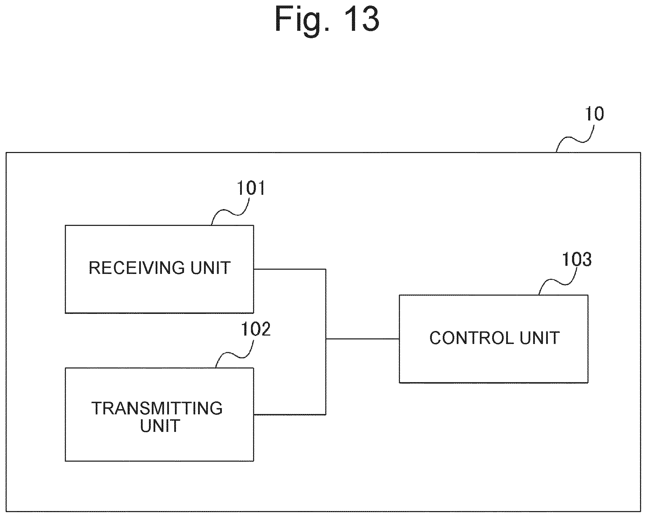

Fig. 13 is a diagram illustrating an example of the functional block configuration of the terminal according to the present embodiment. As illustrated in Fig. 13, the terminal 10 includes a receiving unit 101, a transmitting unit 102, and a control unit 103.

Note that all or some of the functions implemented by the receiving unit 101 and the transmitting unit 102 can be realized by using the communication device 13. Further, all or some of the functions implemented by the receiving unit 101 and the transmitting unit 102, and the function of the control unit 103 can be realized by the processor 11 executing a program stored in the storage device 12. Further, the program can be stored on a storage medium. The storage medium with the program stored thereon may be a non-transitory computer readable medium. The non-transitory storage medium is not particularly limited, but it may be a storage medium such as a USB memory or a CD-ROM.

The receiving unit 101 receives downlink signals. The receiving unit 101 may also receive information and/or data transmitted through each downlink signal. Here, for example, the verb "receive" may also include the meaning of performing processing related to reception including at least one of the reception, demapping, demodulation, decoding, monitoring, and measurement of a radio signal. The downlink signal may also include, for example, at least one of a downlink control channel (for example, a Physical Downlink Control Channel (PDCCH)), a downlink shared channel (for example, a Physical Downlink Shared Channel (PDSCH), a downlink reference signal, a synchronization signal, and a broadcast channel.

The receiving unit 101 monitors PDCCH candidates in a search space to detect Downlink Control Information (DCI). The receiving unit 101 may receive the PDSCH based on the DCI. The receiving unit 101 may receive, through the PDSCH, downlink user data and/or upper layer control information (for example, Medium Access Control Control Element (MAC CE), Radio Resource Control (RRC) message, and the like).

Specifically, the receiving unit 101 receives an RRC Reconfiguration Message (for example, the RRC Reconfiguration Message of Figs. 5, 6, 7, and 11) including information about the configuration of one or more candidate cells (for example, the PSCell Candidate Configuration Information mentioned above) and information about the execution condition of a specific procedure for each of the candidate cells (for example, the Execution Condition Information mentioned above). For example, the receiving unit 101 may receive the RRC Reconfiguration Message from a first base station (for example, the MN) associated with the first cell group. The specific procedure may be a procedure to add the above candidate cell as a primary cell of the second cell group (for example, PSCell), or a procedure to change the primary cell to the above candidate cell.

The transmitting unit 102 transmits uplink signals. The transmitting unit 102 may also transmit information and/or data to be transmitted through each uplink signal. Here, for example, the verb "transmit" may also include the meaning of performing processing related to transmission including at least one of the encoding, modulation, mapping, and transmission of a radio signal. The uplink signal may also include, for example, at least one of an uplink shared channel (for example, a Physical Uplink Shared channel (PUSCH)), a random access preamble (for example, a Physical Random Access Channel (PRACH)), and an uplink reference signal.

The transmitting unit 102 may transmit the PUSCH based on DCI received in the receiving unit 101. The transmitting unit 102 may transmit, through the PUSCH, uplink user data and/or upper layer control information (for example, MAC CE, RRC message, and the like). The RRC message may also include, for example, the measurement report, the RRC Reconfiguration Complete Message, or the SCG Failure Information mentioned above.

Specifically, when the execution of the above-mentioned specific procedure fails, the transmitting unit 102 may transmit a message including information about the reason for the failure (for example, the failure reason information mentioned above) (for example, SCG Failure Information in Figs. 7 and 11). For example, the transmitting unit 102 may transmit the message to the first base station (for example, the MN) associated with the first cell group.

The information about the reason for the failure may include information including at least one of the following, namely: (a) any candidate cell cannot be detected within the given period; (b) any candidate cell can be detected within the given period but the execution condition is not fulfilled; and (c) the execution condition of at least one of the candidate cells is fulfilled within the given period but a random access procedure for the candidate cell fails.

Further, the information about the reason for the failure may include at least one of identification information of the candidate cell that can be detected within the given period at (b), and identification information of the candidate cell the execution condition of which is fulfilled within the given period at (c).

The above message may further include identification information of any cell detected by the terminal 10 other than the candidate cell mentioned above and/or information about the measurement result of the other cell.

The control unit 103 performs various controls in the terminal 10. Specifically, based on information about the configuration of the above candidate cells (for example, the PSCell Candidate Configuration Information mentioned above), and information about the execution condition of a specific procedure for the candidate cells (for example, the Execution Condition Information mentioned above), the control unit 103 controls the execution of the specific procedure (for example, CPAC).

The information about the execution condition (for example, the Execution Condition Information mentioned above) may also include Measurement Object Information about measurement objects in the terminal, Report Information about a report of measurement results of the measurement objects, an identifier of Association Information about association (for example, the association identifier mentioned above) (for example, Fig. 3). The control unit 103 may perform measurements based on the Measurement Object Information to determine whether or not the execution condition is fulfilled based on the measurement results and the Report Information.

The control unit 103 may start the timer in response to receiving the RRC Reconfiguration Message, and when the timer expires, the control unit 103 may remove the information about the configuration of the above candidate cells and the information about the above execution condition (for example, Fig. 5 and Fig. 6). Further, when the timer expires, the control unit 103 may remove at least one of the Measurement Object Information, the Report Information, and the Association Information (for example, Fig. 3). Further, when the execution condition of at least one of the above candidate cells is fulfilled, the control unit 103 may stop the timer.

### «Base Station»

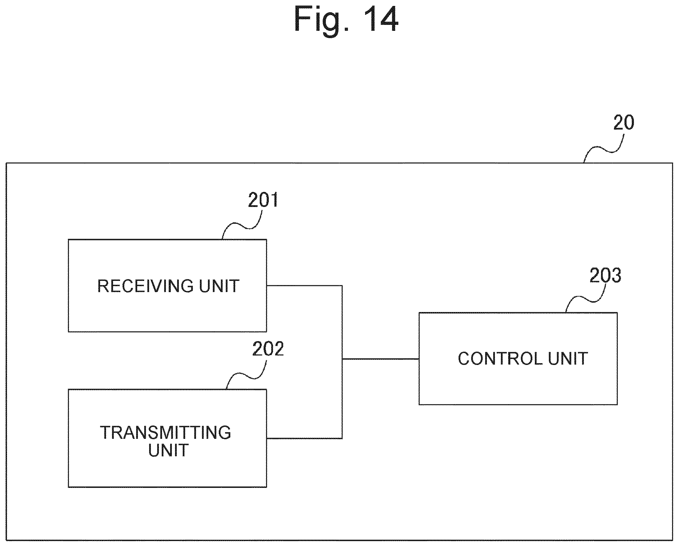

Fig. 14 is a diagram illustrating an example of the functional block configuration of the base station according to the present embodiment. As illustrated in Fig. 14, the base station 20 includes a receiving unit 201, a transmitting unit 202, and a control unit 203.

Note that all or some of the functions implemented by the receiving unit 201 and the transmitting unit 202 can be realized by using the communication device 13. Further, all or some of the functions implemented by the receiving unit 201 and the transmitting unit 202, and the function of the control unit 203 can be realized by the processor 11 executing a program stored in the storage device 12. Further, the program can be stored on a storage medium. The storage medium with the program stored thereon may be a non-transitory computer readable medium. The non-transitory storage medium is not particularly limited but may be a storage medium such as a USB memory or a CD-ROM.

The receiving unit 201 receives the uplink signals mentioned above. The receiving unit 201 may also receive information and/or data transmitted through each of the uplink signals. Specifically, when the execution of the specific procedure fails, the receiving unit 201 receives, from the terminal 10, a message (for example, SCG Failure Information) including information about the reason for the failure (for example, failure reason information) (for example, Fig. 7 and Fig. 11).

Further, when the base station operates as the base station 20 (for example, the MN) associated with the first cell group, the receiving unit 201 may receive, from second base stations (for example, SN candidates) that form respective candidate cells, information about the configuration of the respective candidate cells (for example, PSCell Candidate Configuration Information) and/or information about the execution condition of a specific procedure for the respective candidate cells (for example, Execution Condition Information). Note that the information about the execution condition may also be generated in the base station 20 without being received from the second base stations.

The transmitting unit 202 transmits downlink signals. The transmitting unit 202 may also transmit information and/or data to be transmitted through each of the above-mentioned downlink signals. Specifically, the transmitting unit 202 transmits an RRC Reconfiguration Message including information about the configuration of one or more candidate cells (for example, PSCell Candidate Configuration Information) and information about the execution condition of the specific procedure for the candidate cells (for example, Execution Condition Information) (for example, Figs. 5, 6, 7, and 11).

The transmitting unit 202 may also transmit information about the reason for the failure from the terminal 10 (for example, failure reason information) to other base stations (for example, SN candidates) that form candidate cells.

The control unit 203 performs various controls in the base station 20. The control unit 203 may also control the conditional procedure mentioned above. When the base station operates as a candidate for the base station 20 (for example, an SN candidate) associated with the second cell group, the control unit 203 may control the generation of information about the configuration of a candidate cell (for example, PSCell Candidate Configuration Information) and/or information about the execution condition of a specific procedure for the candidate cell (for example, Execution Condition Information). Further, when the base station operates as the base station 20 (for example, the MN) associated with the first cell group, the control unit 203 may control the generation of Measurement Configuration Information about the configuration of measurements in the terminal 10. The Measurement Configuration Information may also be included in the RRC Reconfiguration Message mentioned above.

The control unit 203 may also perform various controls based on information about the reason for the failure from the terminal 10 (for example, failure reason information).

### (Other Embodiments)

Various signals, information, and parameters in the aforementioned embodiment may be signaled in any layer. In other words, the various signals, information, and parameters mentioned above may also be replaced with signals, information, and parameters in any layer such as the upper layer (for example, Non Access Stratum (NAS) layer, RRC layer, or MAC layer), the lower layer (for example, physical layer), or the like. Further, the notification of the given information is not limited to explicit notification, which may also be implicit notification (for example, by not notifying the information or using any other information).

Further, the names of various signals, information, parameters, IE, channels, time units, and frequency units are just illustrative examples in the aforementioned embodiment, and the names may be replaced with other names. For example, each slot may be any other name as long as it is a time unit having a given number of symbols. Further, RB may be any other name as long as it is a frequency unit having a given number of subcarriers.

Further, the applications of the terminal 10 in the aforementioned embodiment (for example, for RedCap, IoT, and the like) are not limited to those exemplified, and the terminal 10 may also be used for any other purpose (for example, for eMBB, URLLC, Device-to-Device (D2D), Vehicle-to-Everything (V2X), or the like) as long as it has similar functions. Further, the format of various information is not limited to that in the aforementioned embodiment, and it may be changed accordingly such as to bit representation (0 or 1), Boolean (true or false), Integer values, or characters. Further, the singular and the plural in the aforementioned embodiment may be mutually changed.

The embodiment described above is to facilitate the understanding of this disclosure, and it is not intended to limit the interpretation of this disclosure. The flowchart or the sequence described in the embodiment, and the alignment and arrangement of respective elements, indexes, conditions, and the like included in the embodiment are not limited to those exemplified, and can be changed accordingly. Further, at least some of components described in the aforementioned embodiment can be partially replaced or combined.

## Claims

1. A terminal comprising:
a receiving unit which receives an RRC reconfiguration message including information about configuration of one or more candidate cells and information about an execution condition of a specific procedure for the candidate cells;
a control unit which controls execution of the specific procedure based on the information about the configuration and the information about the execution condition; and
a transmitting unit which transmits a message including information about a reason for a failure when the execution of the specific procedure fails.

2. The terminal according to claim 1, wherein the information about the reason for the failure includes information indicative of at least one of the following:
the fact that any of the candidate cells cannot be detected within a given period;
the fact that any of the candidate cells can be detected within the given period but the execution condition is not fulfilled; and
the fact that the execution condition of at least one of the candidate cells is fulfilled within the given period but a random access procedure for the candidate cell fails.

3. The terminal according to claim 2, wherein the information about the reason for the failure includes at least one of the following:
identification information of the candidate cell that can be detected within the given period; and
identification information of the candidate cell the execution condition of which is fulfilled within the given period.

4. The terminal according to 2 or 3, wherein
the given period is a period until a timer started in response to receiving the RRC reconfiguration message expires, and
when the timer expires, the control unit removes the information about the configuration and the information about the execution condition.

5. The terminal according to any one of claims 1 to 4, wherein the message further includes identification information of any cell other than the candidate cells and detected by the terminal, and/or information about a measurement result of the other cell.

6. The terminal according to any one of claims 1 to 5, wherein
the receiving unit receives the RRC reconfiguration message from a first base station associated with a first cell group,
the specific procedure is a procedure to add any of the candidate cells as a primary cell of a second cell group, or a procedure to change the primary cell to the candidate cell, and
when the execution of the specific procedure fails, the transmitting unit transmits, to the first base station, the message including the information about the reason for the failure.

7. A base station comprising:
a transmitting unit which transmits to a terminal an RRC reconfiguration message including information about configuration of one or more candidate cells and information about an execution condition of a specific procedure for the candidate cells; and
a receiving unit which receives, from the terminal, a message including information about a reason for a failure when the terminal fails in the execution of the specific procedure based on the information about the configuration and the information about the execution condition.

8. The base station according to claim 7, wherein the transmitting unit transmits the information about the reason for the failure to any other one of base stations that form the candidate cells.

9. The base station according to claim 8, wherein
the base station is a first base station associated with a first cell group,
the other base station is a second base station that forms the candidate cell of a primary cell of a second cell group, and
the specific procedure is a procedure to add the candidate cell as the primary cell, or a procedure to change the primary cell to the candidate cell.

10. A wireless communication method comprising:
a process of causing a terminal to receive an RRC reconfiguration message including information about configuration of one or more candidate cells and information about an execution condition of a specific procedure for the candidate cells;
a process of causing the terminal to control execution of the specific procedure based on the information about the configuration and the information about the execution condition; and
a process of causing the terminal to transmit a message including information about a reason for a failure when the execution of the specific procedure fails.
